# EUROPÄISCHE PATENTSCHRIFT

(11) **EP 1 289 883 B1**
(45) Veröffentlichungstag und Bekanntmachung des Hinweises auf die Patenterteilung: **04.01.2006**
(21) Anmeldenummer: 00941928.4
(22) Anmeldetag: 24.05.2000
(51) Int. Cl.: C01B 31/10

(54) **VERFAHREN ZUR HERSTELLUNG VON GEFORMTER AKTIVKOHLE**
METHOD FOR THE PRODUCTION OF MOULDED ACTIVATED CHARCOAL
PROCEDE DE PRODUCTION DE CHARBON ACTIF MOULE

(43) Veröffentlichungstag der Anmeldung: 12.03.2003
(73) Patentinhaber: Carbotex Produktions- und Veredelungsbetriebe GmbH, 06803 Bitterfeld-Greppin (DE)
(72) Erfinder: SPIEKER, Hubertus, D-33098 Paderborn (DE); GIEBELHAUSEN, Jann-Michael, D-14712 Rathenow (DE)
(74) Vertreter: Gagel, Roland
(86) Internationale Anmeldenummer: PCT/DE2000/001681
(87) Internationale Veröffentlichungsnummer: WO 2001/089993

(56) Entgegenhaltungen:
- EP-A- 0 315 842
- DE-A- 4 304 026
- GB-A- 1 001 161
- GB-A- 2 280 898
- DATABASE WPI Section Ch, Week 199126 Derwent Publications Ltd., London, GB; Class E36, AN 1991-188771 XP002159395 & JP 03 115111 A (NIPPON STEEL CORP), 16. Mai 1991 (1991-05-16)
- DATABASE WPI Section Ch, Week 199110 Derwent Publications Ltd., London, GB; Class D15, AN 1991-068946 XP002159396 & JP 03 016908 A (TAKEDA CHEM IND LTD), 24. Januar 1991 (1991-01-24)

## Beschreibung

Die Erfindung betrifft ein Verfahren zur Herstellung von geformter Aktivkohle durch Wasserdampfaktivierung in einem kontinuierlich arbeitenden Drehrohrofen. Die Aktivkohle ist hochwertig und vielseitig einsetzbar. Sie wird zur Gas- und Luftreinigung, zur Lösemittelrückgewinnung, insbesondere zur Entfärbung in der chemischen und pharmazeutischen Industrie und in der Wasseraufbereitung verwendet.

Die DE 19 65 04 14 beinhaltet die Herstellung kugelförmiger Adsorbenzien aus Anionenaustauschern, schwach sauren Kationenaustauschern, Vorstufen von Ionenaustauschern und Destillationsrückständen. Anionenaustauscher, Kationenaustauscher und die Vorstufen Ionenaustauschern werden unter oxidierenden Bedingungen bis 750 ° C geschwelt und anschließend aktiviert. Gelförmige Styrol / Divinylbenzole werden mit Radikalbildnern versetzt, pyrolysiert und.aktiviert. Kugelförmige Aktivkohle aus Destillationsrückständen erhält man durch Beimischen von Bitumen, Extrudierung zu zylinderischen Formlingen, Pelletierung zu Kugeln, Verschwelung und Aktivierung. Die genannten Pyrolyse- und Aktivierungsbedingungen führen nur zu einer Aktivkohle mittlerer Qualität bei zu geringer Ausbeute. Die Versetzung von gelförmigen Styrol / Divinylbenzolen mit Radikalbildnern erhöht den produktionstechnischen Aufwand ohne zu einer wesentlichen Verbesserung der Aktivkohlequalität zu führen. Die Verarbeitung von Destillationsrückständen ist nur durch hohen apparativen Aufwand möglich. Das Qualitätsniveau, insbesondere die Abreibfertigkeit und Härte, der auf dieser Weise hergestellten Aktivkohle ist nicht ausreichend.

Die Herstellung von Aktivkohlekügelchen aus lonenaustauschern ist in der DE 43 28 219 beschrieben. Körnige, organische Ionenaustauscher vom Geltyp werden in inerter Atmosphäre bei 600-900 ° C karbonisiert und bei 800 - 900 °C in einer oxidierenden Atmosphäre aktiviert. Die Ionenaustauscher werden bei Temperaturen bis 400 ° C voroxydiert, wobei mit steigender Temperatur der Sauerstoffgehalt reduziert wird. Die Aktivierung erfolgt mittels 3 bis 50 Vol % Wasserdampf in der Wirbelschicht. Zur Vermeidung von Verklebungen werden die Ausgangsprodukte mit Steinkohlenpulver oder Aktivkohle abgepudert. Die hergestellten Aktivkohlekügelchen weisen eine Porenverteilung mit einem engen Spektrum von Mesoporen im Bereich von 100 bis 300 A° und nur wenig Makroporen auf. Diese enge Porenverteilung und der geringe Anteil an Makroporen schränken den Einsatz der Aktivkohlekügelchen deutlich ein. Voraussetzung für ein breites Einsatzspektrum von Aktivkohlen ist eine offene Porenverteilung über den gesamten, Mikro-, Meso- und Makroporen umfassenden, Porenbereich. Wobei ein hoher Anteil von Makroporen für die Diffusion der zu absorbierenden Moleküle wichtig ist. Die Diffusion ist der geschwindigkeits bestimmende Schritt bei der Anwendung von Aktivkohle. Ein weiterer Nachteil besteht darin, daß unter den erfindungsgemäßen Bedingungen keine hochwertige Formaktivkohle mit definierter und variierbarer Porengrößenverteilung und ausreichender Ausbeute hergestellt werden kann.

Die DE - PS 35 33 961 beschreibt eine Methode zur Herstellung von kugelförmiger Aktivkohle aus pulverförmigen Kohlenstoffmaterial wie Ruß, Bitumenkohle, Anthrazit, Holzkohle und Pech als Bindemittel. Durch Agglomerisation, Trocknung, Verkokung und Aktivierung wird eine kugelförmige Aktivkohle erzeugt.

Verfahren zur Herstellung von sphärischer Aktivkohle aus Pech durch Lösemittelagglomerisation und

Aktivierung in einer Ammoniakatmoshpäre bei 550 bis 1000 ° C sowie zusätzlicher Dampfbehandlung ist aus den US - PS 39 09 449 und US - PS 40 45 368 bekannt.

Die US - PS 30 41 116 beschreibt ein Verfahren zur Herstellung von kugelförmigem Kohlematerial und kugelförmiger Aktivkohle aus Pech und amorphen Kohlepartikeln mit einem Viskositätssteuermittel.

Diese Verfahren sind apparativ und technologisch aufwendig, da die Herstellung der kugelförmigen Ausgangsmaterialien zusätzliche Verfahrensstufen erfordern. Der Herstellung von geformten Aktivkohlen mit sehr großer Adsorptionsleistung und BET - Oberfläche sind durch die verfahrensbedingte Abnahme der Härte und Abriebfestigkeit mit zunehmendem Aktivierungsgrad Grenzen gesetzt.

Aufgabe der Erfindung ist es, aus unterschiedlichen kohlenstoffhaltigen Materialien eine hochwertige und vielseitig einsetzbare Formaktivkohle im kontinuierlichen Maßstab herzustellen. Aus verarbeitungstechnischen Gründen soll die Formaktivkohle weitestgehend frei von anhaftendem Staub sein und neben einer hohen Adsorptionsleistung auch eine hohe Rütteldichte aufweisen.

Die geformte Aktivkohle wird aus kugelförmigen Rohstoffen, die mindestens 3 % flüchtige Bestandteile und maximal 40 % Asche, beides bezogen auf Trockensubstanz, enthalten wie Polymerharze, Acetylenkoks und Perlcellulose durch Wasserdampfaktivierung in einem indirekt beheizten, kontinuierlich arbeitenden Drehrohrofen hergestellt.

Erfindungsgemäß wird das vorgeformte, sphärische Ausgangsprodukt in einem auf 880 ° C bis 900 ° C vorgeheizten Drehrohrtrockner bis zu einem Füllstand von 10 % bis 20 % des Ofenvolumens dosiert, eine Produkttemperatur von 250 ° C bis 300 ° C im Bereich von 50 % bis 80 % der Ofenlänge vom Produkteintrag gerechnet eingestellt und bei einer 6 maligen Produktumwälzung je Ofenumdrehung mittels Heißgas im Gegenstrom bei einer Verweilzeit von 30 bis 60 Minuten kontinuierlich bis zu einer Restfeuchte von mindestens 10 % getrocknet, anschließend in einen indirekt beheizten Drehrohrofen, der in eine Karbonisierungs- und Aktivierungszone unterteilt ist, bis zu einem Füllstandsvolumen von 5 bis 12 % gefördert und bei einer 8 maligen Produktumwälzung je Ofenumdrehung sowie einem Produkttemperaturprofil in der Karbonisierungszone von 850 bis 900 ° C, wobei die Verweilzeit 120 bis 180 Minuten beträgt und einem Produkttemperaturprofil in der Aktivierungszone von 910 bis 920 ° C, bei einer Verweilzeit von 480 bis 720 Minuten, unter Zugabe von 3 kg bis 5 kg/h kg Wasserdampf in die Aktivierungszone kontinuierlich im Inertgasgleichstrom karbonisiert und aktiviert.

Im Drehrohrtrockner wird das Produkt mit einer Geschwindigkeit von 6 bis 17 cm/min. transpor-tiert.

Die Strömungsgeschwindigkeit des Heißgases beträgt, bezogen auf den freien Querschnitt des Ofens 0,2 bis 0.5 m/s, bei einem Verhältnis Ofenlänge zu Ofendurchmesser von 5,5 bis 10.

Die Karbonisierung und Aktivierung erfolgt in einem Drehrohrofen, wobei die Karbonisierungszone 20 % und die Aktivierungszone 80 % der beheizten Ofenlänge umfaßt. In der Karbonisierungszonze erfolgt keine Wasserdampfzugabe und das Produkttemperaturprofil, bezogen auf die beheizte Ofenlänge vom Produkteintrag gerechnet, beträgt 850 °C bei Produkteintritt, 880 °C nach 10 % der Ofenlänge und 900 °C nach 20 % der Ofenlänge. Die Aktivierung wird bei einem Produkttemperaturprofil von 910 °C nach 30 % der Ofenlänge, 920 °C nach 40 bis 70 % der Ofenlänge, 915 °C nach 80 % der Ofenlänge und 910 °C beim Produktaustrag durchgeführt. Die Förderungsgeschwindigkeit durch die Karbonisierungs- und Aktivierungszone beträgt 10 bis 30 cm/min., bei einem Verhältnis von Ofenlänge zu Ofendurchmesser von 10 bis 30. Der Wasserdampf wird mit einer Strömungsgeschwindigkeit von 0,1 bis 0,4 m/s bei einem zulässigen Unterdruck von 0,5 bis 2,0 mm Wassersäule auf der Rauchgasseite durch den Ofen geleitet.

Die erfindungsgemäß aus unterschiedlichen kohlenstoffhaltigen kugelförmigen Materialien hergestellte geformte Aktivkohle besitzt neben einer sehr hohen Adsorptionskapazität und einem sehr guten Desorptionsvermögen auch eine hervorragende Abriebfertigkeit. Aufgrund der hohen Rütteldichte und der offenporigen Struktur eignet sich die geformte Aktivkohle für eine Vielzahl von Einsatzgebieten, insbesondere zur Gas- und Luftreinigung, Lösemittelrückgewinnung, Entfärbung und in der Wasseraufbereitung. Von besonderem Vorteil für die praktische Anwendung ist der extrem niedrige anhaftende und freie Staubgehalt der Formaktivkohle und ihre mehrfache Regenerierfähigkeit. Der geringe apparative Aufwand und die hohe Qualitätsausbeute ermöglichen eine ökonomische Herstellung von hochwertigster Formaktivkohle im kontinuierlichen Maßstab.

Die Erfindung wird anhand folgender Ausführungsbeispiele näher erläutert:

### Beispiel 1

| | | |
|---|---|---|
| Sphärisch vorgeformtes Polymerharz der Spezifikation Wassergehalt: | 48,5 % | |
| flüchtige Bestandteile: | 59,0 % (Wf) | |
| fixer Kohlenstoff: | 37,4 % (Wf) | |
| Asche: | 3,6 % (Wf) | |
| Schwefelgehalt: | 15,2 % (Wf) | |
| Körnung: | > 1,25 mm | 0,1 % |
| | 1,25 - 1,00 mm | 4,2 % |
| | 1,00 - 0,80 mm | 40,0 % |
| | 0,80 - 0,50 mm | 53,6 % |
| | < 0,50 mm | 2,1 % |

wird in einen auf 900 °C vorgeheizten Drehrohrtrockner bis zu einem Füllstand von 20 % des Ofenvolumens dosiert, eine Produkttemperatur von 300 °C im Bereich von 70 % der Ofenlänge vom Produkteintrag gerechnet eingestellt und mittels im Gegenstrom geführtes Heißgas bei einer Verweilzeit von 45 Minuten auf eine Restfeuchte von 5,8 % kontinuierlich getrocknet. Die Transportgeschwindigkeit im Drehrohrtrockner beträgt 11,1 cm/min, während das Heißgas mit einer Strömungsgeschwindigkeit von 0,43 m/s, bezogen auf den freien Ofenquerschnitt, durch den Ofen geleitet wird. Das Verhältnis Ofenlänge zu Ofendurchmesser beträgt 5,5. Der Drehrohrtrockner verfügt über Hubschaufeln, die eine 6malige Produktumwälzung je Ofenumdrehung gewährleisten.

Anschließend wird die Karbonisierung und Aktivierung in einem indirekt beheizten Drehrohrofen, dessen Volumen zu 11 % mit Produkt gefüllt ist und der über Hubschaufeln verfügt, die das Produkt 8 mal je Ofenumdrehung umwälzen, nach dem Gleichstromprinzip im Inertgasstrom kontinuierlich durchgeführt. Die Karbonisierungszone umfaßt 20 % und die Aktivierungszone 80 % der beheizten Ofenlänge vom Produkteintrag gerechnet. Für die Karbonisierungszone wird ein Produkttemperaturprofil von 850 °C bei Produkteintritt, 880 °C nach 10 % der Ofenlänge und 900 °C nach 20 % der

Ofenlänge, jeweils bezogen auf die beheizte Ofenlänge und gerechnet vom Produkteintrag, eingestellt.

Die Karbonisierung erfolgt ohne Wasserdampfzugabe bei einer Produktverweilzeit von 128 Minuten.

Für die Aktivierungszone beträgt das Produkttemperaturprofil 910 °C nach 30 % der Ofenlänge, 920 °C im gesamten Bereich von 40 bis 70 % der Ofenlänge, 915 °C nach 80 % der Ofenlänge und 910 °C am Produktaustritt. In die Aktivierungszone wird 4 kg/h Wasserdampf dosiert, der mit einer Strömungsgeschwindigkeit von 0,3 m/s bei einem Unterdruck von 1,5 mm Wassersäule auf der Rauchgasseite und einer Produktverweilzeit von 514 Minuten durch den Ofen geleitet wird.

Die Fördergeschwindigkeit des Produktes in der Karbonisierungs- und Aktivierungszone beträgt 28 cm/min., bei einem Verhältnis von Ofenlänge zu Ofendurchmesser von 12.

Anschließend wird die Formaktivkohle abgekühlt und die Nennkornfraktion 0,315 bis 0,8 mm ausgesiebt. Die erfindungsgemäß hergestellte geformte Aktivkohle ist durch folgende Qualitätsparameter gekennzeichnet:

| | | |
|---|---|---|
| Rüttelgewicht: | 565 g/l | |
| Asche: | 0,4 % | |
| Jodzahl: | 1460 mg/g | |
| Methylenblautiter: | 36,7 ml | |
| BET-Oberfläche: | 1480 m²/g | |
| Abricbhärte: | 100 % | |
| Staubgehalt, anhaftend: | < 0,1 % | |
| Staubgehalt, frei: | < 0,1 % | |
| Regenerierverlust: | 2 % | |
| Körnung: | > 0,80 mm | 0,1 % |
| | 0,80 - 0,50 mm | 10,40 % |
| | 0,50 - 0,40 mm | 76,5 % |
| | 0,40 - 0.315 mm | 12,8 % |
| | <0,315 mm | 0,2 % |

Die geformte Aktivkohle eignet sich hervorragend für den Einsatz zur Gas- und Lufreinigung, Lösemittelrückgewinnung, Entfärbung in der chemischen und pharmazeutischen Industrie und in der Wasserreinigung. Sie besitzt sehr gute Adsorptions- und Desorptionseigenschaften und eine sehr hohe Abriebhärte. Sie ist mehrfach regenerierbar.

### Beispiel 2

Als Ausgangsprodukt für die erfindungsgemäße Herstellung von hochwertiger, geformter Aktivkohle dient Acetylenkoks mit folgender Qualitätsspezifikation:

| | | |
|---|---|---|
| Wassergehalt: | 15,8 % | |
| flüchtige Bestandteile: | 12.2 % (Wf) | |
| fixer Kohlenstoff: | 87,7 % (Wf) | |
| Asche: | 0,1 % (Wf) | |
| Körnung: | > 1,00 mm | 21,2 % |
| | 1,00 - 0,80 mm | 12,0 % |
| | 0,80 - 0,50 mm | 14,2 % |
| | 0,50 - 0,40 mm | 26,4 % |
| | 0,40 - 0,70 mm | 26,0 % |
| | < 0,20 mm | 0,2 % |

Der sphärisch vorgeformte Acetylenkoks wird bis zu einem Füllstand von 20 % in einen auf 900 °C vorgeheizten Drehrohrtrockner dosiert, eine Produkttemperatur von 300 °C im Bereich von 50 % der Ofenlänge vom Produkteintrag gerechnet eingestellt und mittels im Gegenstrom geführtes Heißgas bei einer Verweilzeit von 30 Minuten auf eine Restfeuchte von 0,5 % kontinuierlich getrocknet. Die Transportgeschwindigkeit im Drehrohrtrockner beträgt 16,7 cm/s und die Strömungsgeschwindigkeit des Heißgases 0,3 m/s, bezogen auf den freien Ofenquerschnitt Das Verhältnis Ofenlänge zu Ofendurchmesser beträgt 5,5. Der Drehrohrtrockner verfügt über Hubschaufeln, die eine 6 malige Produktumwälzung je Ofenumdrehung ermöglichen. Anschließend wird die Karbonisierung und Aktivierung im indirekt beheizten Drehrohrofen bei 8 maliger Produktumwälzung je Umdrehung und bei einem konstanten Füllstand von 5 % im Gleichstrom mit Inertgas kontinuierlich durchgeführt. In der Karbonisierungszone , die 20 % der beheizten Ofenlänge umfaßt, wird ein Produkttemperaturprofil von 850 °C bei Produkteintritt, 880 °C nach 10 % und 900 °C nach 20 % der Ofenlänge, jeweils bezogen auf die beheizte Ofenlänge und gerechnet vom Produkteintrag, eingestellt. Die Karbonisierung erfolgt ohne Wasserdampfzugabe bei einer Verweilzeit von 180 Minuten. In der Aktivierungszone wird ein Produkttemperaturprofil von 910 °C nach 30 % der Ofenlänge, 920 °C im gesamten Bereich von 40 bis 70 % der Ofenlänge, 915 °C nach 80 % der Ofenlänge und 910 °C am Produktaustritt eingestellt. 5 kg/h kg Wasserdampf werden mit einer Strömungsgeschwindigkeit von 0,4 m/s und bei einem Unterdruck von 2,0 mm Wassersäule auf der Rauchseite durch die Aktivierungszone geleitet, wobei die Produktverweilzeit 720 Minuten beträgt.

Die Fördergeschwindigkeit für das Produkt in der Karbonisierungszone und Aktivierungszone beträgt 20 cm/min., bei einem Verhältnis von Ofenlänge zu Ofendurchmesser von 12. Nach der Aktivierung wird die Formaktivkohle abgekühlt und abgesiebt.

Die erfindungsgemäß hergestellte geformte Aktivkohle aus Acetylenkoks besitzt folgende Qualitätsspezifikation:

| | | |
|---|---|---|
| Rüttelgewicht: | 480 g/l | |
| Asche: | 1,2 % | |
| Jodzahl: | 1355 mg/g | |
| Methylenblautiter: | 30,8 ml | |
| BET-Oberfläche: | 1385 m²/g | |
| Abriebhärte: | 100 % | |
| Staubgehalt, anhaftend: | <0,1 % | |
| Staubgehalt, frei | <0,1 % | |
| Regenerierverlust: | 2 % | |
| Körnung: | > 0,80 mm | 3,4 % |
| | 0,80 - 0,50 mm | 18,9 % |
| | 0,50 - 0,40 mm | 61,1 % |
| | 0,40 - 0,315 mm | 16,4 % |
| | < 0,315 mm | 0,2 % |

Sie ist besonders für den universellen Einsatz zur Gas- und Luftreinigung mit dem Schwerpunkt Atemschutz und Benzindampfadsorption geeignet.

### Beispiel 3

Für die erfindungsgemäße Herstellung von geformter Aktivkohle wird Perlcellulose mit folgenden Qualitätsparametern verwendet:

| | | |
|---|---|---|
| Wassergehalt: | 65,7 % | |
| flüchtige Bestandteile: | 82,4 % (Wf) | |
| fixer Kohlenstoff: | 14,2 % (Wf) | |
| Asche: | 3,4 % (Wf) | |
| Körnung: | > 1,00 mm | 2,1 % |
| | 1,00 - 0,80 mm | 10,4 % |
| | 0,80 - 0,50 mm | 87,3 % |
| | < 0,50 mm | 0,2 % |

Die sphärisch vorgeformte Perlcellulose wird in einen auf 880 °C vorgeheizten Drehrohrtrockner bis zu einem Füllstand von 10 % des Ofenvolumens dosiert, eine Produkttemperatur von 250 °C im Bereich von 50 % der Ofenlänge vom Produkteintrag gerechnet eingestellt und mittels Heißgas, das im Gegenstrom durch den Ofen geleitet wird, bei einer Verweilzeit von 60 Minuten auf eine Restfeuchte von 9,5 % kontinuierlich getrocknet. Das Produkt wird im Trockner mit einer Geschwindigkeit von 8,3 cm/min. gefördert. Die Strömungsgeschwindigkeit des Heißgases beträgt bezogen auf den freien Querschnitt des Ofens 0,5 m/s und das Verhältnis Ofenlänge zu Ofendurchmesser 5,5. Eingebaute Hubschaufeln gewährleisten eine 6 malige Produktumwälzung je Ofenumdrehung.

Die Karbonisierung und Aktivierung erfolgt kontinuierlich in einem indirekt beheizten Drehrohrofen bei einem Füllstand von 12 % nach dem Gleichstromprinzip mit Inertgas und 8 maliger Produktumwälzung je Ofenumdrehung. Karbonisierungszone und Aktivierungszone stehen im Drehrohrofen im Verhältnis von 20 % zu 80 %. Die Karbonisierungszone durchläuft das Produkt bei einem Produkttemperaturprofil von
- 850 °C bei Produkteintritt
- 880 °C nach 10 % der Ofenlänge
- 900 °C nach 20 % der Ofenlänge,
jeweils bezogen auf die beheizte Ofenlänge und gerechnet vom Produkteintrag, mit einer Verweilzeit von 120 Minuten und die Aktivierungszone bei einem Produkttemperaturprofil von
- 910 °C nach 30 % der Ofenlänge
- 920 °C im gesamten Bereich von 40 bis 70 % der Ofenlänge
- 915 °C nach 80 % der Ofenlänge
- 910 °C am Produktaustritt,
ebenfalls bezogen auf die beheizte Ofenlänge und gerechnet vom Produkteintrag, mit einer Verweilzeit von 480 Minuten. In die Aktivierungszone werden 3kg/h kg Wasserdampf mit einer Strömungsgeschwindigkeit von 0,3 m/s und bei einem Unterdruck von 1,0 mm Wassersäule auf der Rauchgasseite dosiert. Das Produkt wird im Drehrohrofen mit einer Geschwindigkeit von 30 cm/min. gefördert. Das Verhältnis Ofenlänge zu Ofendurchmesser beträgt 12.
Anschließend wird die Formaktivkohle abgekühlt und die Nennkornfraktion abgesiebt.
Die erfindungsgemäß aus Perlcellulose hergestellte geformte Aktivkohle zeichnet sich durch folgende Qualitätsmerkmale aus:

| | | |
|---|---|---|
| Rüttelgewicht: | 450 g/l | |
| Asche: | 3,2 % | |
| Jodzahl: | 1400 mg/g | |
| Methylenblautiter: | 32,3 ml | |
| BET-Oberfläche: | 1420 m2/g | |
| Abriebhärte: | 98 % | |
| Staubgehalt, anhaftend: | < 0,1 % | |
| Staubgehalt, frei: | < 0,1 % | |
| Regenerierverlust: | 4 % | |
| Körnung: | > 0,80 mm | 0,2 % |
| | 0,80 - 0,50 mm | 12,3 % |
| | 0,50 - 0,40 mm | 70,7 % |
| | 0,40 - 0,315 mm | 16,7 % |
| | < 0,315 mm | 0,1 % |

Die geformte Aktivkohle besitzt hervorragende Adsorptions- und verarbeitungstechnische Eigenschaften. Sie ist vielseitig einsetzbar und kann vorzugsweise zur Entfärbung und Wasseraufbereitung im Anschwemm- und Festbettfilter verwendet werden.

## Patentansprüche

1. Verfahren zur Herstellung von geformter Aktivkohle aus sphärisch vorgeformten Rohstoffen, die, bezogen auf Trockensubstanz, mindestens 3 % flüchtige Bestandteile und maximal 4 % Asche enthalten, durch Wasserdampfaktivierung im Inertgasstrom in einem indirekt beheizten, kontinuierlich arbeitenden Drehrohrofen, **dadurch gekennzeichnet, daß** man den sphärisch vorgeformten Rohstoff in einen auf 880 bis 900 °C vorgeheizten Drehrohrtrockner bis zu einem Füllstandsvolumen von 10 bis 20 % dosiert, eine Produkttemperatur im Trockner von 250 bis 300 °C im Bereich von 50 bis 80 % der Ofenlänge vom Produkteintrag gerechnet einstellt und bei einer 6maligen Produktumwälzung je Ofenumdrehung und einer Verweilzeit von 30 bis 60 Minuten mittels Heißgas im Gegenstrom bis zu einer Restfeuchte von mindestens 10 % kontinuierlich trocknet, anschließend das getrocknete Produkt bis zu einem Füllstandsvolumen von 5 bis 10 % in einen indirekt beheizten Drehrohrofen, der in Karbonisierungs- und Aktivierungszone unterteilt ist, fördert und bei einer 8maligen Produktumwälzung je Ofenumdrehung sowie bei einem Produkttemperaturprofil in der Karbonisierungszone von 850 bis 900 °C und einer Verweilzeit von 120 bis 180 Minuten und bei einem Produkttemperaturprofil in der Aktivierungszone von 910 bis 920 °C und einer Verweilzeit von 480 bis 720 Minuten unter Zugabe von 3 bis 5 kg/h kg Wasserdampf in die Aktivierungszone kontinuierlich im Inertgasstrom karbonisiert und aktiviert.

2. Verfahren nach Anspruch 1, **dadurch gekennzeichnet, daß** der Rohstoff im Drehrohrtrockner mit einer Geschwindigkeit von 6 bis 17 cm/min. transportiert wird.

3. Verfahren nach Anspruch 1 und 2, **dadurch gekennzeichnet, daß** die Strömungsgeschwindigkeit des Heißgases im Trockner, bezogen auf den freien Querschnitt, 0,2 bis 0,5 m/s, bei einem Verhältnis von Ofenlänge zu Ofendurchmesser von 5,5 bis 10, beträgt.

4. Verfahren nach Anspruch 1, **dadurch gekennzeichnet, daß** die Karbonisierungszone 20 % und die Aktivierungszone 80 % der beheizten Ofenlänge vom Produkteintrag gerechnet umfaßt.

5. Verfahren nach Anspruch 1 und 4, **dadurch gekennzeichnet, daß** die Karbonisierung bei einem Produkttemperaturprofil, bezogen auf die beheizte Ofenlänge vom Produkteintrag gerechnet, von 850 °C am Produkteintritt, 880 °C nach 10 % der Ofenlänge und 900 °C nach 20 % der Ofenlänge erfolgt.

6. Verfahren nach Anspruch 1 und 4, **dadurch gekennzeichnet, daß** die Aktivierung bei einem Produkttemperaturprofil, bezogen auf die beheizte Ofenlänge vom Produkteintrag gerechnet, von 910 °C nach 30 % der Ofenlänge, 920 °C nach 40 bis 70 % der Ofenlänge, 915 °C nach 80 % der Ofenlänge und 910 °C am Produktaustritt erfolgt.

7. Verfahren nach Anspruch 1, 4, 5 und 6 **dadurch gekennzeichnet, daß** das Produkt mit einer Geschwindigkeit von 10 bis 30 cm/min. bei einem Verhältnis von Ofenlänge zu Ofendurchmesser von 10 bis 30 durch die Karbonisierungs- und Aktivierungszone gefördert wird.

8. Verfahren nach Anspruch 1, 4, 6 und 7 **dadurch gekennzeichnet, daß** der Wasserdampf die Aktivierungszone mit einer Geschwindigkeit von 0,1 bis 0,4 m/s bei einem Unterdruck auf der Rauchgasseite von 0,5 - 2,0 mm Wassersäule durchströmt.

## Claims

1. Process for the production of formed activated carbon from spherically preformed raw materials containing at least 3 % volatile components and maximum 4 % ash, based on dry substance, by steam activation in a stream of inert gas in a continually operating rotary oven heated indirectly, **characterised in that** the spherically preformed raw material is metered into a rotary dryer, preheated to 880 to 900 °C, up to a volume of fill of 10 to 20 %, a product temperature in the dryer of 250 to 300 °C is adjusted in the region of 50 to 80 % of the oven length, calculated from the product inlet, and continuous drying is carried out with a product circulation of 6 times per oven rotation and a residence time of 30 to 60 minutes, by means of hot gas in a counter-current up to a residual moisture content of at least 10 %, the dried product is subsequently conveyed, up to a volume of fill of 5 to 10 %, into a tubular oven which is heated indirectly and subdivided into a carbonisation and an activation zone, and carbonisation and activation are carried out continuously in a stream of inert gas with a product circulation of 8 times per oven rotation and with a product temperature profile in the carbonisation zone of 850 to 900 °C and a residence time of 120 to 180 minutes and with a product temperature profile in the activation zone of 910 to 920 °C and a residence time of 480 to 720 minutes, with an addition of 3 to 5 kg/h kg of steam into the activation zone.

2. Process according to claim 1 **characterised in that** the raw material is transported in the rotary dryer at a rate of 6 to 17 cm/min.

3. Process according to claim 1 and 2 **characterised in that** the flow rate of the hot gas in the dryer is 0.2 to 0.5 m/s, based on the available cross-section, with a ratio of oven length to oven diameter of 5.5 to 10.

4. Process according to claim 1 **characterised in that** the carbonisation zone comprises 20 % and the activation zone 80 % of the heated oven length, calculated from the product inlet.

5. Process according to claim 1 and 4 **characterised in that** carbonisation takes place with a product temperature profile, based on the heated oven length calculated from the product inlet, of 850 °C at the product inlet, of 880 °C after 10 % of the oven length and of 900 °C after 20 % of the oven length.

6. Process according to claim 1 and 4 **characterised in that** activation takes place with a product temperature profile, based on the heated oven length calculated from the product inlet, of 910 °C after 30 % of the oven length, of 920 °C after 40 to 70 % of the oven length, of 915 °C after 80 % of the oven length and of 910 °C at the product outlet.

7. Process according to claim 1, 4, 5 and 6 **characterised in that** the product is conveyed at a rate of 10 to 30 cm/min with a ratio of oven length to oven diameter of 10 to 30 through the carbonisation and activation zone.

8. Process according to claim 1, 4, 6 and 7 **characterised in that** the steam passes through the activation zone at a rate of 0.1 to 0.4 m/s at a reduced pressure, on the flue gas side, of 0.5 - 2.0 mm water column.

## Revendications

1. Procédé de préparation de charbon actif moulé, à partir de matières premières pré-moulées de façon sphérique, qui, contiennent au moins 3 % de composants volatils et au maximum 4 % de cendres par rapport à la substance sèche, au moyen d'une activation par la vapeur d'eau dans un courant gazeux inerte, dans un four tubulaire rotatif chauffé de façon indirecte, fonctionnant en continu, **caractérisé en ce que** l'on introduit une dose de la matière première pré-moulée de façon sphérique, dans un sécheur.tubulaire rotatif préchauffé à une température de 880 à 900 °C jusqu'à un volume de remplissage de 10 à 20 %, l'on ajuste une température de produit dans le sécheur de 250 à 300 °C dans la plage de 50 à 80 % de la longueur du four compté à partir de l'entrée du produit, et, en faisant tourner le produit 6 fois à chaque rotation du four, et pendant une durée de séjour de 30 à 60 minutes, on sèche en continu au moyen d'un gaz chaud à contre-courant, jusqu'à une humidité résiduelle d'au moins 10 %, ensuite on transporte le produit séché jusqu'à un volume de remplissage de 5 à 10 % dans un four tubulaire rotatif chauffé de façon indirecte, qui est divisé en une zone de carbonisation et une zone d'activation, et on carbonise et on active en continu, dans le courant gazeux inerte, tout en faisant tourner le produit 8 fois à chaque rotation du four, ainsi que pour un profil de température de produit dans la zone de carbonisation de 850 à 900 °C, et une durée de séjour de 120 à 180 minutes, et pour un profil de température de produit dans la zone d'activation de 910 à 920 °C et une durée de séjour de 480 à 720 minutes, en ajoutant 3 à 5 kg/h par kg de vapeur d'eau dans la zone d'activation.

2. Procédé selon la revendication 1, **caractérisé en ce que** la matière première est transportée dans le sécheur tubulaire rotatif, à une vitesse de 6 à 17 cm/min.

3. Procédé selon la revendication 1 et 2, **caractérisé en ce que**, la vitesse d'écoulement du gaz chaud dans le sécheur, rapportée à la section libre, est de 0,2 à 0,5 m/s, pour un rapport de longueur de four au diamètre du four de 5,5 à 10.

4. Procédé selon la revendication 1, **caractérisé en ce que** la zone de carbonisation constitue 20 % de la longueur du four chauffée, compté à partir de l'entrée du produit, et la zone d'activation, 80 % de celle-ci.

5. Procédé selon la revendication 1 et 4, **caractérisé en ce que** la carbonisation se réalise pour un profil de température de produit, rapporté à la longueur du four chauffée comptée à partir de l'entrée du produit, de 850 °C à l'entrée du produit, 880 °C après 10 % de la longueur du four, et 900 °C après 20 % de la longueur du four.

6. Procédé selon la revendication 1 et 4, **caractérisé en ce que** l'activation se réalise pour un profil de température de produit, rapporté à la longueur du four chauffée comptée à partir de l'entrée du produit, de 910 °C après 30 % de la longueur du four, 920 °C après 40 à 70 % de la longueur du four, 915 °C après 80 % de la longueur du four et 910 °C à la sortie du produit.

7. Procédé selon la revendication 1, 4, 5 et 6, **caractérisé en ce que** le produit est transporté à une vitesse de 10 à 30 cm/min pour un rapport de la longueur de four au diamètre du four de 10 à 30, à travers la zone de carbonisation et d'activation.

8. Procédé selon la revendication 1, 4, 6 et 7, **caractérisé en ce que** la vapeur d'eau s'écoule à travers la zone d'activation avec une vitesse de 0,1 à 0,4 m/s dans le cas d'une pression négative sur le côté de gaz brûlé de 0,5 à 2,0 mm d'une colonne d'eau.
